# EUROPEAN PATENT SPECIFICATION

(11) **EP 2 816 069 B1**
(45) Date of publication and mention of the grant of the patent: **29.03.2017**
(21) Application number: 14165774.2
(22) Date of filing: 24.04.2014
(51) Int. Cl.: C08G 75/00, C08J 5/22, C08G 75/23, C08L 25/02, C08L 25/18, C08L 71/10, C08L 81/06, H01B 1/06, H01M 8/10, H01M 8/02

(54) **SULFONATED POLYETHERSULFONE COPOLYMER CONTAINING HYDROXYL GROUPS AND PREPARATION METHOD THEREOF, POLYMER ELECTROLYTE MEMBRANE FOR FUEL CELLS AND MEMBRANE ELECTRODE ASSEMBLY COMPRISING THE SAME**
SULFONIERTES POLYETHERSULFONCOPOLYMER MIT HYDROXYLGRUPPEN UND HERSTELLUNGSVERFAHREN DAFÜR, POLYMERELEKTROLYTMEMBRAN FÜR BRENNSTOFFZELLEN UND MEMBRANELEKTRODENANORDNUNG DAMIT
COPOLYMÈRE DE POLYÉTHERSULFONE SULFONÉ CONTENANT DES GROUPES HYDROXYLES ET SON PROCÉDÉ DE PRÉPARATION, MEMBRANE ÉLECTROLYTIQUE POLYMÈRE POUR PILES À COMBUSTIBLE ET ENSEMBLE MEMBRANE-ÉLECTRODE COMPRENANT CELUI-CI

(30) Priority: 02.05.2013 KR 20130049490
(43) Date of publication of application: 24.12.2014
(73) Proprietor: Korea Institute of Science and Technology, Seoul 136-791 (KR)
(72) Inventor: Kim, Hyoung-Juhn, Gyeonggi-do (KR); Kwon, Yeon Hye, Seoul (KR); Han, Jun Young, Seoul (KR); Ham, Hyung Chul, Seoul (KR); Jang, Jong Hyun, Seoul (KR); Nam, Suk Woo, Seoul (KR); Cho, Eun Ae, Seoul (KR); Yoo, Sung Jong, Seoul (KR); Yoon, Chang Won, Seoul (KR)
(74) Representative: advotec.

(56) References cited:
- EP-A1- 1 394 879
- EP-A1- 1 449 886
- US-A1- 2012 237 850
- US-A1- 2014 329 169

## Description

### TECHNICAL FIELD

The following disclosure relates to a hydroxyl group-containing sulfonated poly-ethersulfone copolymer, a method for preparing the same, a polymer electrolyte membrane for fuel cell, and a membrane electrode assembly including the same. More particularly, the following disclosure relates to a hydroxyl group-containing sulfonated polyethersulfone electrolyte membrane and a membrane electrode assembly including the same, which are applied to a fuel cell to provide significantly higher ion conductivity as compared to the sulfonated polymer electrolyte membranes according to the related art.

### BACKGROUND

Fuel cells are electrochemical devices by which chemical energy of hydrogen and oxygen contained in a hydrocarbon-based material such as methanol, ethanol or natural gas is converted directly into electric energy. Such an energy conversion process in a fuel cell is highly efficient and eco-friendly, and thus many attentions have been given to fuel cells recently.

In general, fuel cells are classified into phosphoric acid fuel cells (PAFC), molten carbonate fuel cells (MCFC), solid oxide fuel cells (SOFC), polymer electrolyte membrane fuel cells (PEMFC) and alkaline fuel cells (AFC), depending on the type of electrolyte used therein. Although each type of the fuel cells is operated on the basis of the same principle, the types of fuel used in each fuel cell, operation temperatures, catalysts and electrolytes are different from one another. It is known that polymer electrolyte fuel cells among such fuel cells are highly useful not only for transport systems but also for small-scale floor type power generation systems. In this context, a membrane electrode assembly including a polymer electrolyte membrane is a key part of such fuel cells. Thus, active studies have been conducted particularly about polymer electrolyte membranes.

In the case of such polymer electrolyte membranes, fluorine-based electrolyte membranes such as Nafion^{®} available from Dupont Co. have been used currently. However, they are very expensive and show high permeability to hydrogen as fuel and-air as oxidant. Thus, development of novel materials has been increasingly in demand (Patent Document 1).

In addition, since perfluorosulfonate polymer electrolytes such as Nafion are expensive and have insufficient creep resistance during assemblage or operation, they may cause a drop in voltage or generation of a short circuit, resulting in poor reliability. To solve this problem, some studies have been conducted about the use of a modified fluororesin as a polymer electrolyte membrane. However, this still has a room for improvement in terms of hydrogen and air permeability (Patent Document 2).

Therefore, more recently, as economic hydrocarbon-based polymer electrolyte membranes are developed, active studies have been made to substitute Nafion-based polymers with them. Particularly, hydrocarbon-based polymer electrolyte membranes are advantageous in that they have lower hydrogen and air permeability as compared to fluoropolymer electrolyte membranes. Thus, it is expected that such hydrocarbon-based polymer electrolyte membranes substitute for fluoropolymer electrolyte membranes. Recent studies about hydrocarbon-based polymer electrolyte membranes are focused on sulfonation of aromatic polymers having high mechanical properties in addition to oxidation resistance and stabilities under acidic conditions. Particularly, Haibo Zhang et. al reported that sulfonated poly(arylene ether nitrile ketone) having a cyano (-CN) group introduced to the polymer backbone was prepared and poly(arylene ether nitrile ketone) having a sulfonation degree of 50% and 60% showed high ion conductivity even at high temperature. However, such sulfonated poly(arylene ether nitrile ketone) tends to undergo swelling by absorbing water under a wet condition. In general, in a polymer electrolyte fuel cell, a wet condition and a dry condition are repeated, and the repeated swelling/shrinking may cause cracking in a polymer electrolyte membrane, resulting in degradation of the quality. However, there is no report about the measurement of ion conductivity under various relative humidity conditions (Non-Patent Document 1).

In addition, Baijun Liu et al. reported that sulfonated poly(aryl ether ketone) having a carboxyl group (-COOH) introduced to the polymer backbone was prepared, a crosslinked polymer electrolyte membrane was further prepared through the reaction with polyvinyl alcohol, and the ion conductivity was evaluated as the function of temperature. After the evaluation, it was reported that the crosslinked polymer electrolyte membrane showed an ion conductivity of 0.15 S cm⁻¹ at 65°C, and thus could be applied to direct methanol fuel cells. However, there is no report about the results of measurement of ion conductivity under various relative humidity conditions (Non-Patent Document 2).

US 2012/237850 A1, EP 1 449 886 A1 and EP 1 394 879 A1 (patent documents 3.-5.) disclose the preparation of polyethersulfones as well as their application in fuel cells. In particular, EP 1 449 886 A1 discloses polymer electrolyte membranes for fuel cells comprising sulfonated polyethersulfone copolymer.

Under these circumstances, according to the present disclosure, it has been found that introduction of hydroxyl groups (-OH) capable of forming stronger hydrogen bonds as compared to cyano or carboxyl groups to the aromatic polymer backbone of sulfonated hydrocarbon-based polymer improves ion conductivity significantly, and allows maintenance of high ion conductivity under different temperatures and various relative humidity conditions at a specific sulfonation degree, and thus the sulfonated hydrocarbon-based polymer containing hydroxyl groups can be applied to polymer electrolyte membranes for fuel cells and membrane electrode assemblies including the same. The present disclosure is based on this finding.

### [References]

### Patent Documents

Patent Document 1. US Patent No. 5,599,638
Patent Document 2. Japanese Patent Laid-Open No. 2002-313364
Patent Document 3. US 2012/237850 A1
Patent Document 4. EP 1 449 886 A1
Patent Document 5. EP 1 394 879 A1

### Non-Patent Documents

Non-Patent Document 1. Haibo Zhang et al., J. Membr. Sci. 264 (2005) 56-64
Non-Patent Document 2. Baijun Liu et al., J. Mater. Chem., 2008, 18, 4675-4682

### SUMMARY

An embodiment of the present disclosure is directed to providing a hydroxyl group-containing sulfonated polyethersulfone copolymer, which shows significantly higher ion conductivity under various temperature and humidity conditions, as compared to the sulfonated polymer electrolyte membranes according to the related art, as well as providing a method for preparing the hydroxyl group-containing sulfonated polyethersulfone copolymer, and a polymer electrolyte membrane for fuel cells and a membrane electrode assembly using the same.

The present invention concerns a polymer electrolyte membrane for fuel cells comprising a hydroxyl group-containing sulfonated polyethersulfone copolymer having the repeating units represented by the following Chemical Formula 1: 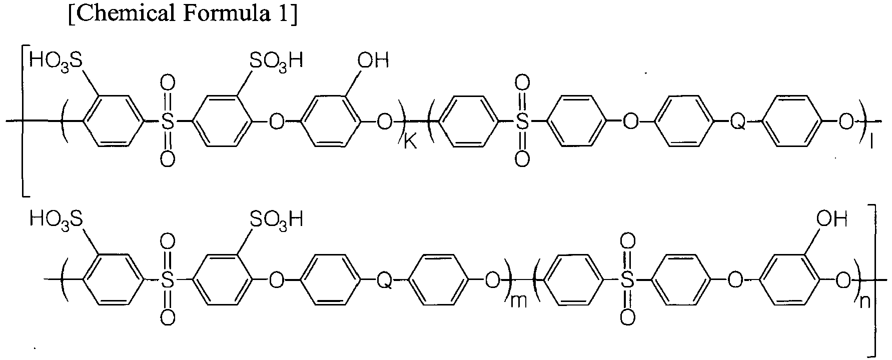 wherein Q is O, S, C(=O), C(=O)NH, Si(CH₃)₂, (CH₂)ₚ (1≤p≤10), (CF₂)_{q} (1≤q≤10), C(CH₃)₂, C(CF₃)₂, or C(CH₃)(CF₃), and each of k, l, m and n corresponds to the molar ratio of each monomer for use in polycondensation.

According to an embodiment, the hydroxyl group-containing sulfonated polyethersulfone copolymer having the repeating units represented by Chemical Formula 1 has a sulfonation degree of 30-70%.

The present invention further concerns a method for preparing a hydroxyl group-containing sulfonated polyethersulfone copolymer, including the steps of:
i) allowing reactants including bis(4-fluoro-3-sulfophenyl)sulfone disodium salt or dipotassium salt, bis(4-fluorophenyl)sulfone, alkoxyhydroquinone, 4,4'-biphenol-based compound and potassium carbonate to react in the presence of a polymerization solvent to obtain sulfonated polyethersulfone copolymer I containing a sodium- or potassium-sulfonate group and alkoxy group;
ii) converting the sodium- or potassium-sulfonate group of the copolymer I into a sulfonyl chloride group to obtain sulfonated polyethersulfone copolymer II containing a sulfonyl chloride group and alkoxy group;
iii) converting the alkoxy group of copolymer II into a hydroxyl group to obtain sulfonated polyethersulfone copolymer III containing a sulfonyl chloride group and hydroxyl group; and
iv) converting the sulfonyl chloride group of copolymer III into a sulfonic acid group.

According to an embodiment, the alkoxyhydroquinone is any one selected from the group consisting of methoxyhydroquinone, ethoxyhydroquinone, n-propoxyhydroquinone, isopropoxyhydroquinone, n-butoxyhydroquinone, isobutoxyhydroquinone, and tert-butoxyhydroquinone.

According to another embodiment, the 4,4'-biphenol-based compound is represented by the following Chemical Formula I: 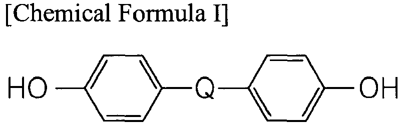 wherein Q is O, S, C(=O), C(=O)NH, Si(CH₃)₂, (CH₂)ₚ (1≤p≤10), (CF₂)_{q} (1≤q≤10), C(CH₃)₂, C(CF₃)₂, or C(CH₃)(CF₃).

According to still another embodiment, copolymer I is obtained by mixing the reactants with the polymerization solvent and refluxed at 130-140°C for 3-4 hours to perform dehydration, and then heating the reaction mixture to 160-180°C and carrying out reaction for 12-24 hours to obtain a polymer solution, followed by precipitation in isopropyl alcohol, washing with water and drying under vacuum.

According to still another embodiment, the polymerization solvent is a mixture of dimethylacetamide (DMAc) or dimethylsulfoxide (DMSO) with toluene in a volume ratio of 2:1.

According to still another embodiment, the conversion in step ii) is carried out by dissolving copolymer I into dimethylformamide, carrying out reaction with thionyl chloride at 50-60°C for 3-4 hours, providing a polymer solution from which excess thionyl chloride is removed by distillation, and precipitating the polymer solution in isopropyl alcohol, followed by washing with water and drying under vacuum.

According to still another embodiment, the conversion in step iii) is carried out by dissolving copolymer II into dichloromethane at 0°C or lower, adding an excessive amount of dealkylating agent gradually thereto under argon atmosphere to carry out reaction of 6-8 hours, and recovering the precipitated product through a filter, followed by washing with water and drying under vacuum.

According to still another embodiment, the dealkylating agent used in the conversion in step iii) is a strong Lewis acid or hydrogen halide.

According to still another embodiment, the strong Lewis acid as dealkylating agent is boron tribromide.

According to yet another embodiment, the conversion in step iv) is carried out by immersing copolymer III into dilute sulfuric acid or hydrochloric acid for 3-4 hours, followed by treatment with boiling water for 12-24 hours and drying.

The present invention further concerns a method for producing a polymer electrolyte membrane for fuel cells, including the steps of:
i) dissolving sulfonated polyethersulfone copolymer III containing a sulfonyl chloride group and hydroxyl group into dimethyl acetamide, dimethyl sulfoxide or N-methyl pyrrolidone to obtain a 2-5 wt% polymer solution;
ii) applying the polymer solution onto a glass plate, followed by drying, to form a membrane; and
iii) immersing the membrane into dilute sulfuric acid or hydrochloric acid solution for 3-4 hours, followed by washing with boiling water, to convert the sulfonyl chloride group into a sulfonic acid group.

The present invention further concerns a membrane electrode assembly for fuel cells, including the polymer electrolyte membrane for fuel cells disposed between an anode and cathode.

The present invention further concerns a fuel cell including the membrane electrode assembly.

The hydroxyl group-containing sulfonated polyethersulfone copolymer disclosed herein shows significantly higher ion conductivity under various temperature and humidity conditions, as compared to the sulfonated polymer electrolyte membranes according to the related art. Therefore, the hydroxyl group-containing sulfonated polyethersulfone copolymer disclosed herein substitutes for expensive fluoropolymer electrolyte membranes such as Nation, thereby contributing to improvement of the quality of a polymer electrolyte fuel cell.

### BRIEF DESCRIPTION OF THE DRAWINGS

FIG. 1 is ¹H-NMR spectrum of copolymer I obtained from step (i) of Example 1 according to the present disclosure.
FIG. 2 is ¹H-NMR spectrum of the hydroxyl group-containing copolymer obtained from step (iv) of Example 1 according to the present disclosure.
FIG. 3 is FT-IR spectrum (a) of copolymer I obtained from step (i) of Example 1 according to the present disclosure, FT-IR spectrum (b) of copolymer II obtained from step (ii) of Example 1, and FT-IR spectrum (c) of the hydroxyl group-containing copolymer obtained from step (iv) of Example 1.
FIGS. 4 to FIG. 6 are graphs illustrating the ion conductivity of each of the polymer electrolyte membranes obtained from Example 2 according to the present disclosure and Comparative Example as the function of temperature and relative humidity.

### DETAILED DESCRIPTION OF EMBODIMENTS

Hereinafter, the hydroxyl group-containing sulfonated polyethersulfone copolymer and the method for preparing the same will be explained in detail. To obtain the target product, hydroxyl group-containing sulfonated polyethersulfone copolymer, a multi-step process is carried out.

In general, to convert the alkoxy group of an aromatic alkoxy group-containing polymer into a hydroxyl group, conversion is to be carried out by using dichloromethane as a solvent. The alkoxy group-containing sulfonated polyethersulfone copolymer obtained from step (i) according to the present disclosure cannot be dissolved in dichloromethane. Thus, it is difficult to carry out the conversion. Therefore, step (ii) is carried out to convert the sodium- or potassium-sulfonate group (-SO₃M, wherein M= Na or K) in the alkoxy group-containing sulfonated polyethersulfone copolymer obtained from step (i) into a sulfonyl chloride group (-SO₂Cl), so that the alkoxy group-containing sulfonated polyethersulfone copolymer may be dissolved in dichloromethane. In this manner, it is possible to obtain a sulfonated polyethersulfone copolymer containing a sulfonyl chloride group and alkoxy group. Then, step (iii) is carried out, wherein the copolymer containing a sulfonyl chloride group and alkoxy group is dissolved into dichloromethane and allowed to react with a dealkylating agent. In this manner, it is possible to obtain a copolymer whose alkoxy group is converted into a hydroxyl group. Herein, particular examples of the dealkylating agent capable of cleaving the ether bond of aromatic alkoxy group to convert the alkoxy group into a hydroxyl group include strong Lewis acids such as boron trichloride (BCl₃) and boron tribromide (BBr₃), or hydrogen halides such as HF, HCl, HBr and HI. Among those, a strong Lewis acid such as boron tribromide is used preferably.

Then, finally, the copolymer obtained from step (iii) is treated with acid and boiling water to convert the sulfonyl chloride group into a sulfonic acid group (-SO₃H), thereby providing the target product, hydroxyl group-containing sulfonated polyethersulfone copolymer according to the present disclosure.

In one aspect, there is provided a hydroxyl group-containing sulfonated polyeth-ersulfone copolymer having the repeating units represented by Chemical Formula 1: 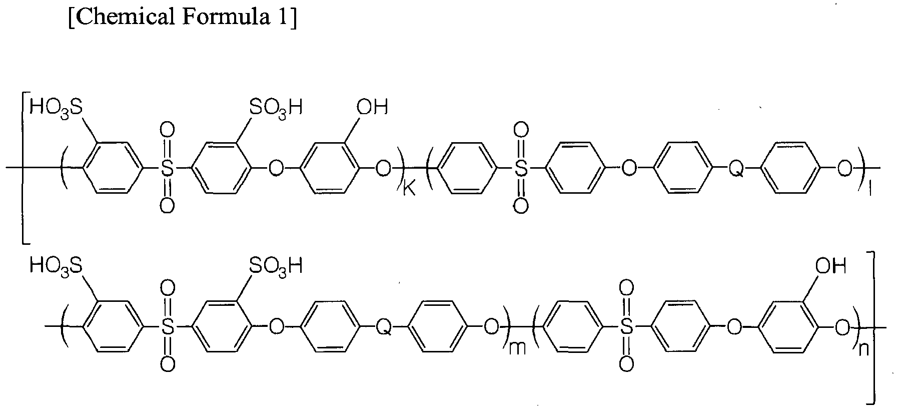 wherein Q is O, S, C(=O), C(=O)NH, Si(CH₃)₂, (CH₂)ₚ (1≤p≤10), (CF₂)_{q} (1≤q≤10), C(CH₃)₂, C(CF₃)₂, or C(CH₃)(CF₃), and each of k, l, m and n corresponds to the molar ratio of each monomer for use in polycondensation.

According to the present disclosure, since the theoretical value of a sulfonation degree is determined by the relative molar ratio of each monomer for use in sulfonation with no accompanying unexpected side reactions, and shows little difference from the analytical value obtained by experiments, it is possible to control a sulfonation degree as necessary by varying the amount of each monomer for use in sulfonation. In other words, as a sulfonation degree increases, a copolymer has increased ion conductivity but shows excessively high hydrophilicity so that it may be swelled or even dissolved in water. On the contrary, as a sulfonation degree decreases, a copolymer shows hydrophobicity and increased resistance against water but has decreased ion conductivity. Thus, it is preferable to control a sulfonation degree adequately in such a manner that a copolymer maintains resistance against water even under high ion conductivity. Therefore, according to an embodiment, a sulfonation degree is controlled within a range of 30-70%. According to a non-limiting embodiment, a preferred sulfonation degree is 30%.

In another aspect, there is provided a method for preparing a hydroxyl group-containing sulfonated polyethersulfone copolymer having the repeating units represented by Chemical Formula 1, including the steps of:
i) allowing reactants including bis(4-fluoro-3-sulfophenyl)sulfone disodium salt or dipotassium salt, bis(4-fluorophenyl)sulfone, alkoxyhydroquinone, 4,4'-biphenol-based compound and potassium carbonate to react in the presence of a polymerization solvent to obtain sulfonated polyethersulfone copolymer I containing a sodium- or potassium-sulfonate group and alkoxy group;
ii) converting the sodium- or potassium-sulfonate group of the copolymer I into a sulfonyl chloride group to obtain sulfonated polyethersulfone copolymer II containing a sulfonyl chloride group and alkoxy group;
iii) converting the alkoxy group of copolymer II into a hydroxyl group to obtain sulfonated polyethersulfone copolymer III containing a sulfonyl chloride group and hydroxyl group; and
iv) converting the sulfonyl chloride group of copolymer III into a sulfonic acid group.

First, in step i), bis(4-fluoro-3-sulfophenyl)sulfone disodium salt or dipotassium salt, bis(4-fluorophenyl)sulfone, alkoxyhydroquinone, 4,4'-biphenol-based compound and potassium carbonate are used as reactants for forming the repeating units of the sulfonated polyethersulfone copolymer. In addition, potassium carbonate (K₂CO₃) that is a weak base is used to form phenolate during the reaction.

The alkoxyhydroquinone used herein is any one selected from the group consisting of methoxyhydroquinone, ethoxyhydroquinone, n-propoxyhydroquinone, isopropoxyhydroquinone, n-butoxyhydroquinone, isobutoxyhydroquinone, and tert-butoxyhydroquinone. Methoxyhydroquinone is used more preferably in view of reactivity.

In addition, 4,4'-biphenol-based compound represented by Chemical Formula I is used as a monomer: 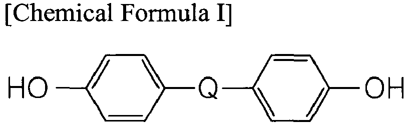 wherein Q is O, S, C(=O), C(=O)NH, Si(CH₃)₂, (CH₂)ₚ (1≤p≤10), (CF₂)_{q} (1≤q≤10), C(CH₃)₂, C(CF₃)₂, or C(CH₃)(CF₃).

The polymerization solvent used in step i) is a mixture of dimethylacetamide (DMAc) or dimethylsulfoxide (DMSO) with toluene in a volumetric ratio of 2:1. Herein, toluene is used in combination with the solvent in order to facilitate removal of water generated as a byproduct during the polycondensation of step i) by using an azeotropic point. The reactants are mixed with the polymerization solvent and dehydrated by refluxing at 130-140°C for 3-4 hours. Then, the reaction mixture is warmed to 160-180° and subjected to reaction for 12-24 hours to provide a polymer solution, which, in turn, is precipitated in isopropyl alcohol, followed by washing with water and drying under vacuum. In this manner, sulfonated polyethersulfone copolymer I containing a sodium- or potassium-sulfonate group (-SO₃M, M=Na or K) and alkoxy group, represented by Chemical Formula 2, is obtained. 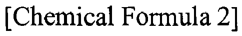 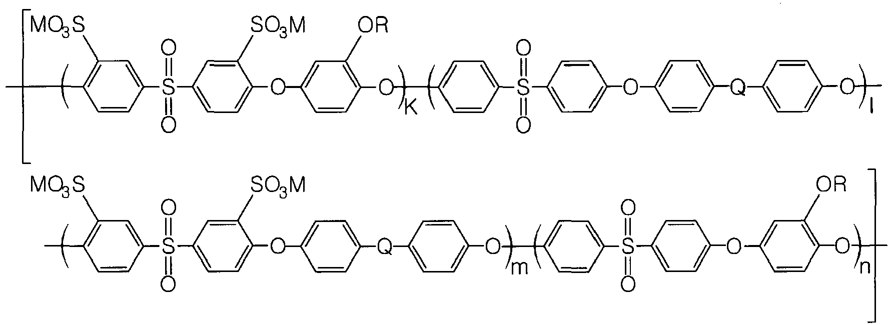 wherein -OR is methoxy group, ethoxy group, n-propoxy group, isopropoxy group, n-butoxy group, isobutoxy group or tert-butoxy group, Q is O, S, C(=O), C(=O)NH, Si(CH₃)₂, (CH₂)ₚ (1≤p≤10), (CF₂)_{q} (1≤q≤10), C(CH₃)₂, C(CF₃)₂, or C(CH₃)(CF₃), and each of k, l, m and n corresponds to the molar ratio of each monomer for use in polycondensation.

Next, in step ii), the sodium- or potassium-sulfonate group of copolymer I is converted into a sulfonyl group to obtain sulfonated polyethersulfone copolymer II containing a sulfonyl chloride group and alkoxy group. The conversion in step ii) is carried out by dissolving copolymer I into dimethyl formamide (DMF), carrying out reaction with thionyl chloride at 50-60°C for 3-4 hours to obtain a polymer solution from which excessive thionyl chloride is removed by distillation, and carrying out precipitation of the polymer solution in isopropyl alcohol, followed by washing with water and drying under vacuum, to obtain a sulfonated polyethersulfone copolymer II containing a sulfonyl group and alkoxy group, represented by Chemical Formula 3: 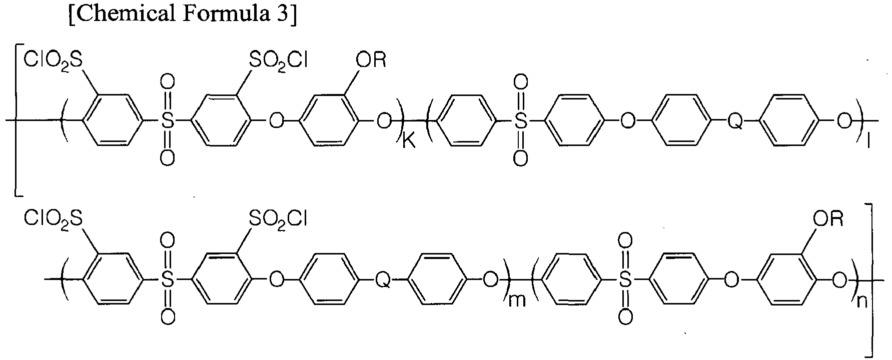 wherein -OR, Q, k, l, m and n are the same as defined in above Chemical Formula 2.

Then, in step iii), the alkoxy group of copolymer II is converted into a hydroxyl group to obtain sulfonated polyethersulfone copolymer III containing a sulfonyl group and hydroxyl group. The conversion in step iii) is carried out by dissolving copolymer II in dichloromethane at 0°C or lower, adding an excessive amount of dealkylating agent gradually thereto under argon atmosphere to carry out reaction for 6-8 hours, and recovering the precipitated polymer through a filter, followed by washing with water and drying under vacuum, to obtain sulfonated polyethersulfone copolymer III containing a sulfonyl chloride group and hydroxyl group, represented by Chemical Formula 4: 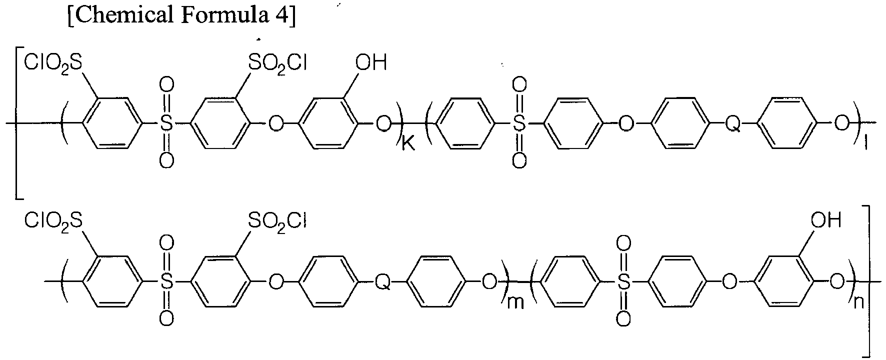 wherein -OR, Q, k, l, m and n are the same as defined in above Chemical Formula 2.

The dealkylating agent used for the conversion in step iii) includes include strong Lewis acids such as boron trichloride (BCl₃) and boron tribromide (BBr₃), or hydrogen halides such as HF, HCl, HBr and HI. Preferably, a strong Lewis acid such as boron tribromide is used.

Finally, in step iv), the sulfonyl group of copolymer III is converted into a sulfonic acid group to obtain the target product, hydroxyl group-containing sulfonated polyethersulfone copolymer represented by Chemical Formula 1. The conversion in step iv) is carried out by immersing copolymer III into dilute sulfuric acid or hydrochloric acid solution for 3-4 hours, and treating the resultant solution with boiling water for 12-24 hours, followed by drying, to obtain the hydroxyl group-containing sulfonated polyethersulfone copolymer represented by Chemical Formula 1.

In addition, basically, the hydroxyl group-containing sulfonated polyethersulfone copolymer represented by Chemical Formula 1 is a hydrocarbon-based aromatic polymer. Further, it has excellent thermal and mechanical properties, lower hydrogen and air permeability as compared to fluoropolymers, and particularly provides improved ion conductivity by virtue of the sulfonation of its polymer backbone, so that it can be used as a polymer electrolyte membrane for fuel cells.

In still another aspect, there is provided a method for producing a polymer electrolyte membrane for fuel cells, including the steps of:
i) dissolving sulfonated polyethersulfone copolymer III containing a sulfonyl chloride group and hydroxyl group into dimethyl acetamide, dimethyl sulfoxide or N-methyl pyrrolidone to obtain a 2-5 wt% polymer solution;
ii) applying the polymer solution onto a glass plate, followed by drying, to form a membrane; and
iii) immersing the membrane into dilute sulfuric acid or hydrochloric acid solution for 3-4 hours, followed by washing with boiling water, to convert the sulfonyl chloride group into a sulfonic acid group.

Further, the polymer electrolyte membrane for fuel cells is disposed between an anode and cathode so that it may be applied to a membrane electrode assembly for fuel cells, which, in turn, may be applied as a key part of polymer electrolyte fuel cells.

The examples and experiments will now be described. The following examples and experiments are for illustrative purposes only and not intended to limit the scope of this disclosure.

### [Example 1] Preparation of Hydroxyl Group-Containing Sulfonated Polyethersulfone (Sulfonation Degree 30%)

### Step i): Preparation of Sulfonated Polyethersulfone Copolymer I Containing Sodium Sulfonate Group and Methoxy Group

In a 250 mL round-bottom flask, 1.375 g (3 mmol) of bis(4-fluoro-3-sulfophenyl)sulfone disodium salt, 1.780 g (7 mmol) of bis(4-fluorophenyl)sulfone, 0.420 g (3 mmol) of 2-methoxyhydroquinone (3 mmol), 1.598 g (7 mmol) of bisphenol A and 2.764 g (20 mmol) of potassium carbonate are added to a mixture of 10 mL of dimethylacetamide with 5 mL of toluene. A Dean-Stark trap is attached to the flask to carry out dehydration by refluxing at 140°C for 4 hours. Then, the reaction materials are warmed to 170°C to carry out reaction for 24 hours, thereby providing a polymer solution. The polymer solution is precipitated in isopropyl alcohol to obtain polymer precipitate, which, in turn, is washed with water several times and dried under vacuum to obtain sulfonated polyethersulfone copolymer I containing a sodium sulfonate group and methoxy group.

### Step (ii): Preparation of Sulfonated Polyethersulfone Copolymer II Containing Sulfonyl Chloride Group and Methoxy Group

First, 2.0 g of copolymer I obtained from step (i) is dissolved into 4 mL of dimethyl formamide and 20 mL of thionyl chloride is added thereto to carry out reaction for 4 hours, thereby providing a polymer solution from which excess thionyl chloride is removed by distillation. Next, the polymer solution is precipitated in isopropyl alcohol to obtain polymer precipitate, which, in turn, is washed with water several times and dried under vacuum to obtain sulfonated polyethersulfone copolymer II containing a sulfonyl chloride group and methoxy group.

### Step (iii): Preparation of Sulfonated Polyether Suflone Copolymer III Containing Sulfonyl Chloride Group and Hydroxyl Group

First, 2.0 g of copolymer II obtained from step (ii) is dissolved into dichloromethane at 0°C and an excessive amount of boron tribromide is added gradually thereto under argon atmosphere to carry out reaction for 6 hours. Next, the precipitated polymer is recovered through a filter, washed with water and dried under vacuum to obtain sulfonated polyethersulfone copolymer III containing a sulfonyl chloride group and hydroxyl group.

### Step (iv): Conversion of Sulfonyl Group of Copolymer III into Sulfonic Acid Group

First, copolymer III obtained from step (iii) is immersed in 10% hydrochloric acid solution for 3 hours and treated with boiling water for 25 hours, followed by drying, to obtain a hydroxyl group-containing sulfonated polyethersulfone copolymer represented by Chemical Formula 1 (wherein the sulfonyl chloride group of copolymer III is converted into a sulfonic acid group).

### [Example 2] Production of Hydroxyl Group-Containing Polymer Electrolyte Membrane for Fuel Cells

Copolymer III obtained from step (iii) is dissolved into dimethylacetamide to obtain 2 wt% polymer solution. The polymer solution is applied onto a glass plate and dried to form a membrane. The resultant membrane is immersed in 10% hydrochloric acid solution for 3 hours, washed with boiling water to convert the sulfonyl chloride group of copolymer III into a sulfonic acid group, and dried under vacuum to obtain a hydroxyl group-containing polymer electrolyte membrane for fuel cells.

### [Comparative Example] Production of Polymer Electrolyte Membrane for Fuel Cells Containing No Hydroxyl Group

Step (i) is repeated to obtain a sulfonated polyethersulfone copolymer containing a sodium sulfonate group, except that 2-methoxyhydroquinone is not used but 2.283 g (10 mmol) of bisphenol A is used. Then, Example 2 is repeated by using the copolymer obtained as mentioned above to convert the sodium sulfonate group into a sulfonic acid group, thereby providing a polymer electrolyte membrane for fuel cells containing no hydroxyl group.

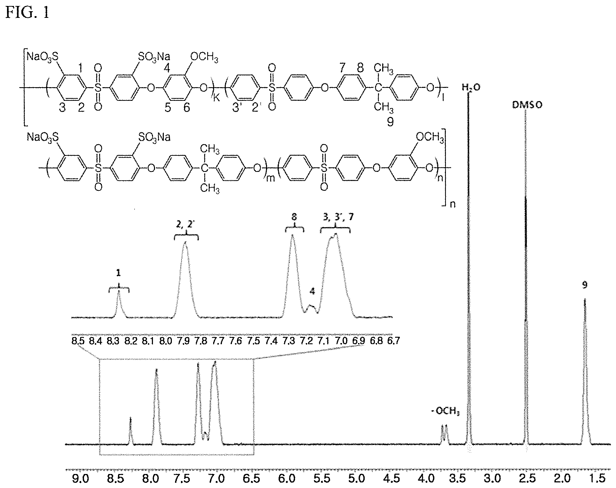

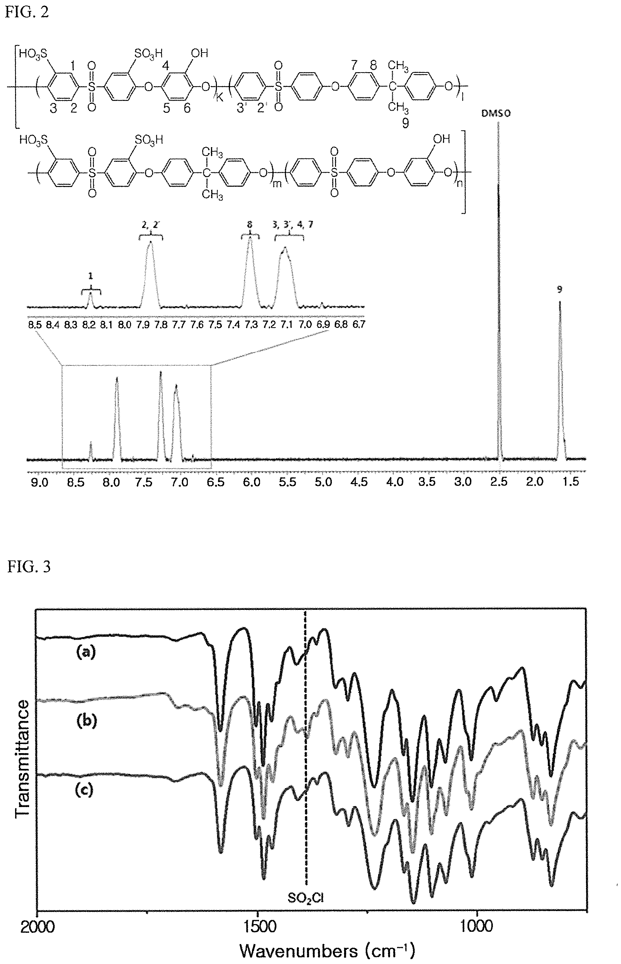

FIG. 1 and FIG. 2 are ¹H-NMR spectra illustrating copolymer I obtained from step (i) of Example 1 and the hydroxyl group-containing copolymer obtained from step (iv) of Example 1, respectively. It can be seen that the hydrogen peak (3.7 ppm) of methoxy group (-OCH₃) occurring in ¹H-NMR spectrum of FIG. 1 disappears completely in ¹H-NMR spectrum of FIG. 2, suggesting that the methoxy group (-OCH₃) is converted into the hydroxyl group (-OH).

In addition, FIG. 3 is FT-IR spectrum (a) of copolymer I obtained from step (i) of Example 1 according to the present disclosure, FT-IR spectrum (b) of copolymer II obtained from step (ii) of Example 1, and FT-IR spectrum (c) of the hydroxyl group-containing copolymer obtained from step (iv) of Example 1. In portion (b) of FIG. 3, a new absorption peak appears at about 1360-1380 cm⁻¹, suggesting that the sodium sulfonate group of (a) is converted into the sulfonyl chloride group. Further, the absorption peak is not found in (c), suggesting that the sulfonyl chloride group is converted into the sulfonic acid group.

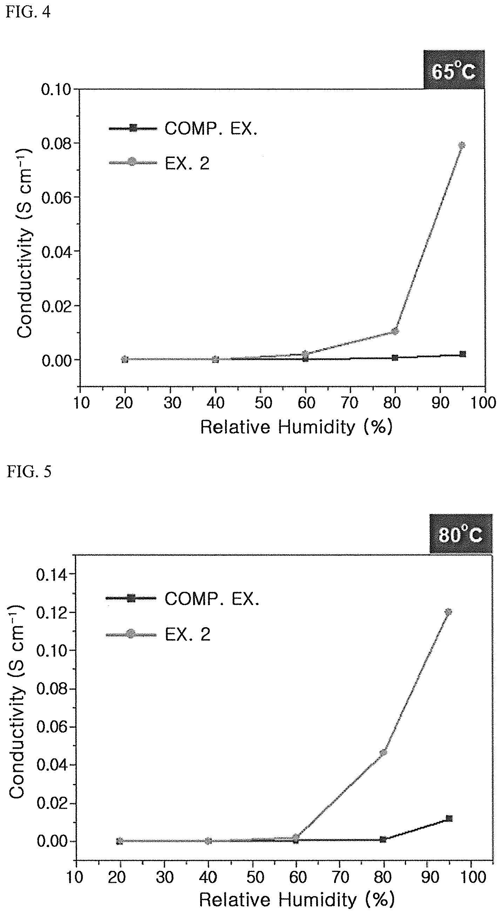

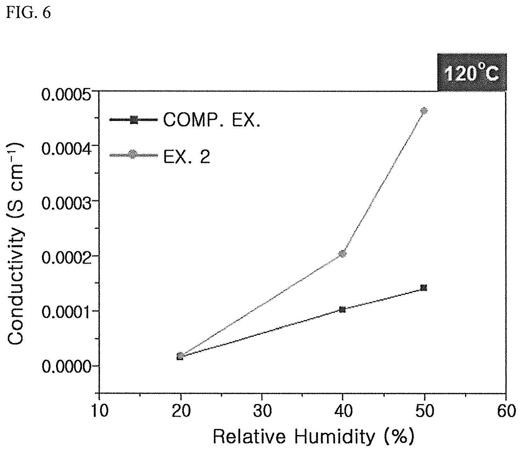

FIGS. 4 to FIG. 6 are graphs illustrating the ion conductivity of each of the polymer electrolyte membranes obtained from Example 2 according to the present disclosure and Comparative Example as the function of temperature and relative humidity. As shown in FIGS. 4 to FIG. 6, the hydroxyl group-containing polymer electrolyte membrane for fuel cells obtained from Example 2 according to the present disclosure shows improved ion conductivity at substantially all temperature and relative humidity ranges, as compared to the polymer electrolyte membrane for fuel cells containing no hydroxyl group, obtained from Comparative Example. It is thought that the above results are derived from the strong hydrogen bonding of the hydroxyl groups introduced to the polymer backbone in the hydroxyl group-containing sulfonated polyethersulfone copolymer according to the present disclosure.

Therefore, the hydroxyl group-containing sulfonated polyethersulfone copolymer electrolyte membrane according to the present disclosure shows significantly higher ion conductivity under various temperature and humidity conditions as compared to the sulfonated polymer electrolyte membranes according to the related art. Therefore, it is expected that the hydroxyl group-containing sulfonated polyethersulfone copolymer disclosed herein substitutes for expensive fluoropolymer electrolyte membranes such as Nafion, thereby contributing to improvement of the quality of a polymer electrolyte fuel cell. Further, the polymer electrolyte membrane for fuel cells is disposed between an anode and cathode so that it may be applied to a membrane electrode assembly for fuel cells, which, in turn, may be applied as a key part of polymer electrolyte fuel cells.

## Claims

1. A polymer electrolyte membrane for fuel cells comprising the hydroxyl group-containing sulfonated polyethersulfone copolymer having the repeating units represented by the following Chemical Formula 1: 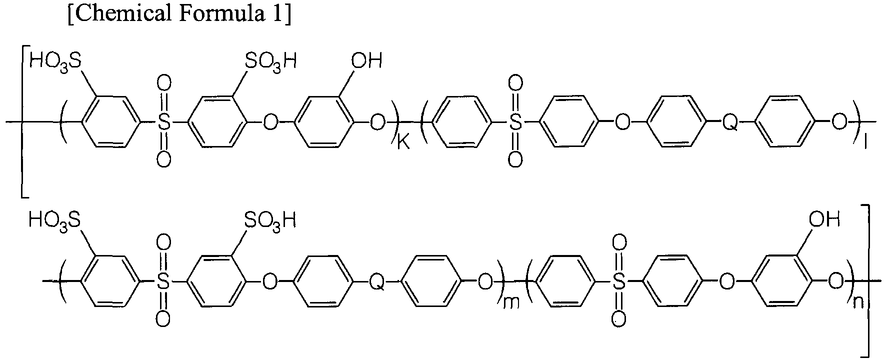 wherein Q is O, S, C(=O), C(=O)NH, Si(CH₃)₂, (CH₂)ₚ (1≤p≤10), (CF₂)_{q} (1≤q≤10), C(CH₃)₂, C(CF₃)₂, or C(CH₃)(CF₃), and each of k, l, m and n corresponds to the molar ratio of each monomer for use in polycondensation.

2. The polymer electrolyte membrane according to claim 1, which has a sulfonation degree of 30-70%.

3. A method for preparing a hydroxyl group-containing sulfonated polyethersulfone copolymer, comprising the steps of:
i) allowing reactants including bis(4-fluoro-3-sulfophenyl)sulfone disodium salt or dipotassium salt, bis(4-fluorophenyl)sulfone, alkoxyhydroquinone, 4,4'-biphenol-based compound and potassium carbonate to react in the presence of a polymerization solvent to obtain sulfonated polyethersulfone copolymer I containing a sodium- or potassium-sulfonate group and alkoxy group;
ii) converting the sodium- or potassium-sulfonate group of the copolymer I into a sulfonyl chloride group to obtain sulfonated polyethersulfone copolymer II containing a sulfonyl chloride group and alkoxy group;
iii) converting the alkoxy group of copolymer II into a hydroxyl group to obtain sulfonated polyethersulfone copolymer III containing a sulfonyl chloride group and hydroxyl group; and
iv) converting the sulfonyl chloride group of copolymer III into a sulfonic acid group.

4. The method for preparing a hydroxyl group-containing sulfonated polyethersulfone copolymer according to claim 3, wherein the alkoxyhydroquinone is any one selected from the group consisting of methoxyhydroquinone, ethoxyhydroquinone, n-propoxyhydroquinone, isopropoxyhydroquinone, n-butoxyhydroquinone, isobutoxyhydroquinone, and tert-butoxyhydroquinone.

5. The method for preparing a hydroxyl group-containing sulfonated polyethersulfone copolymer according to claim 3, wherein the 4,4'-biphenol-based compound is represented by the following Chemical Formula I: 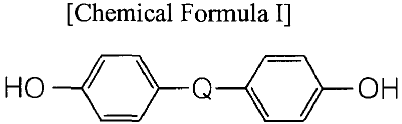 wherein Q is O, S, C(=O), C(=O)NH, Si(CH₃)₂, (CH₂)ₚ (1≤p≤10), (CF₂)_{q} (1≤q≤10), C(CH₃)₂, C(CF₃)₂, or C(CH₃)(CF₃).

6. The method for preparing a hydroxyl group-containing sulfonated polyethersulfone copolymer according to claim 3, wherein copolymer I of step (i) is obtained by mixing the reactants with the polymerization solvent and refluxed at 130-140°C for 3-4 hours to perform dehydration, and then heating the reaction mixture to 160-180°C and carrying out reaction for 12-24 hours to obtain a polymer solution, followed by precipitation in isopropyl alcohol, washing with water and drying under vacuum.

7. The method for preparing a hydroxyl group-containing sulfonated poly-ethersulfone copolymer according to claim 6, wherein the polymerization solvent is a mixture of dimethylacetamide (DMAc) or dimethylsulfoxide (DMSO) with toluene in a volume ratio of 2:1.

8. The method for preparing a hydroxyl group-containing sulfonated polyethersulfone copolymer according to claim 3, wherein the conversion in step ii) is carried out by dissolving copolymer I into dimethylformamide, carrying out reaction with thionyl chloride at 50-60°C for 3-4 hours, providing a polymer solution from which excess thionyl chloride is removed by distillation, and precipitating the polymer solution in isopropyl alcohol, followed by washing with water and drying under vacuum.

9. The method for preparing a hydroxyl group-containing sulfonated polyethersulfone copolymer according to claim 3, wherein the conversion in step iii) is carried out by dissolving copolymer II into dichloromethane at 0°C or lower, adding an excessive amount of dealkylating agent gradually thereto under argon atmosphere to carry out reaction of 6-8 hours, and recovering the precipitated product through a filter, followed by washing with water and drying under vacuum.

10. The method for preparing a hydroxyl group-containing sulfonated polyethersulfone copolymer according to claim 9, wherein the dealkylating agent used in the conversion in step iii) is a strong Lewis acid or hydrogen halide.

11. The method for preparing a hydroxyl group-containing sulfonated poly-ethersulfone copolymer according to claim 10, wherein the strong Lewis acid as dealkylating agent is boron tribromide.

12. The method for preparing a hydroxyl group-containing sulfonated polyethersulfone copolymer according to claim 3, wherein the conversion in step iv) is carried out by immersing copolymer III into dilute sulfuric acid or hydrochloric acid for 3-4 hours, followed by treatment with boiling water for 12-24 hours and drying.

13. A method for producing a polymer electrolyte membrane for fuel cells, comprising the steps of:
i) dissolving copolymer III as defined in claim 3 into dimethyl acetamide, dimethyl sulfoxide or N-methyl pyrrolidone to obtain a 2-5 wt% polymer solution;
ii) applying the polymer solution onto a glass plate, followed by drying, to form a membrane; and
iii) immersing the membrane into dilute sulfuric acid or hydrochloric acid solution for 3-4 hours, followed by washing with boiling water.

14. A membrane electrode assembly for fuel cells, wherein the polymer electrolyte membrane for fuel cells as defined in claim 1 is disposed between an anode and cathode.

15. A fuel cell comprising the membrane electrode assembly as defined in claim 14.

## Patentansprüche

1. Polymerelektrolytmembran für Brennstoffzellen mit einem hydroxylgruppenhaltigen sulfonierten Polyethersulfon-Copolymer, welches die durch die folgende chemische Formel 1 dargestellten, sich wiederholenden Einheiten aufweist: 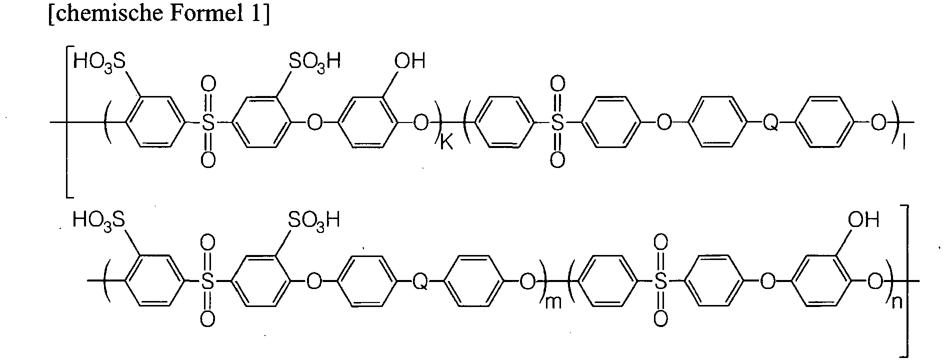 wobei Q O, S, C(=O), C(=O)NH, Si(CH₃)₂, (CH₂)ₚ (1 ≤ p ≤ 10), (CF₂)_{q} (1 ≤ q ≤ 10), C(CH₃)₂, C(CF₃)₂ oder C(CH₃)(CF₃) ist und k, 1, m und n jeweils dem Molverhältnis jedes Monomers zur Verwendung bei einer Polykondensation entsprechen.

2. Polymerelektrolytmembran nach Anspruch 1, welche einen Sulfonierungsgrad von 30 bis 70 % aufweist.

3. Verfahren zur Herstellung eines hydroxylgruppenhaltigen sulfonierten Polyethersulfon-Copolymers, wobei das Verfahren die folgenden Schritte umfasst:
i) Reagierenlassen von Bis(4-fluor-3-sulfophenyl)sulfon-Dinatriumsalz oder -Dikaliumsalz, Bis(4-fluorphenyl)sulfon, Alkoxyhydrochinon, eine Verbindung auf Basis von 4,4'-Biphenol und Kaliumcarbonat umfassenden Reaktanten in Anwesenheit eines Polymerisationslösungsmittels zur Gewinnung von sulfoniertem Polyethersulfon-Copolymer I, welches eine Natrium- oder Kaliumsulfonatgruppe und eine Alkoxygruppe enthält;
ii) Umwandeln der Natrium- oder Kaliumsulfonatgruppe von Copolymer I in eine Sulfonylchloridgruppe zur Gewinnung von sulfoniertem Polyethersulfon-Copolymer II, welches eine Sulfonylchloridgruppe und eine Alkoxygruppe enthält;
iii) Umwandeln der Alkoxygruppe von Copolymer II in eine Hydroxylgruppe zur Gewinnung von sulfoniertem Polyethersulfon-Copolymer III, welches eine Sulfonylchloridgruppe und eine Hydroxylgruppe enthält; und
iv) Umwandeln der Sulfonylchloridgruppe von Copolymer III in eine Sulfonsäuregruppe.

4. Verfahren zur Herstellung eines hydroxylgruppenhaltigen sulfonierten Polyethersulfon-Copolymers nach Anspruch 3, wobei das Alkoxyhydrochinon aus der Gruppe bestehend aus Methoxyhydrochinon, Ethoxyhydrochinon, n-Propoxyhydrochinon, Isopropoxyhydrochinon, n-Butoxyhydrochinon, Isobutoxyhydrochinon und tert-Butoxyhydrochinon ausgewählt ist.

5. Verfahren zur Herstellung eines hydroxylgruppenhaltigen sulfonierten Polyethersulfon-Copolymers nach Anspruch 3, wobei die Verbindung auf Basis von 4,4'-Biphenol durch die folgende chemische Formel I dargestellt ist: 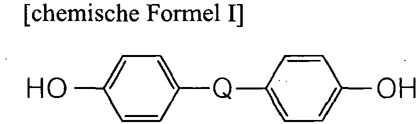 wobei Q O, S, C(=O), C(=O)NH, Si(CH₃)₂, (CH₂)ₚ (1 ≤ p ≤ 10), (CF₂)_{q} (1 ≤ q ≤ 10), C(CH₃)₂, C(CF₃)₂, oder C(CH₃)(CF₃) ist.

6. Verfahren zur Herstellung eines hydroxylgruppenhaltigen sulfonierten Polyethersulfon-Copolymers nach Anspruch 3, wobei das Copolymer I aus Schritt (i) durch Mischen der Reaktanten mit dem Polymerisationslösungsmittel und Rückflusskühlen zur Dehydratisierung bei 130 bis 140 °C für 3 bis 4 Stunden, anschließendes Erhitzen des Reaktionsgemischs auf 160 bis 180 °C und Reagieren für 12 bis 24 Stunden zur Gewinnung einer Polymerlösung, gefolgt von einer Abscheidung in Isopropylalkohol, Waschen mit Wasser und Vakuumtrocknen gewonnen wird.

7. Verfahren zur Herstellung eines hydroxylgruppenhaltigen sulfonierten Polyethersulfon-Copolymers nach Anspruch 6, wobei das Polymerisationslösungsmittel ein Gemisch aus Dimethylacetamid (DMAc) oder Dimethylsulfoxid (DMSO) und Toluol in einem Volumenverhältnis von 2 : 1 ist.

8. Verfahren zur Herstellung eines hydroxylgruppenhaltigen sulfonierten Polyethersulfon-Copolymers nach Anspruch 3, wobei die Umwandlung in Schritt ii) durch Lösen von Copolymer I in Dimethylformamid, Reagieren mit Thionylchlorid bei 50 bis 60 °C für 3 bis 4 Stunden, Herstellen einer Polymerlösung, aus welcher überschüssiges Thionylchlorid durch Destillation entfernt wird, und Abscheiden der Polymerlösung in Isopropylalkohol, gefolgt von Waschen mit Wasser und Vakuumtrocknen durchgeführt wird.

9. Verfahren zur Herstellung eines hydroxylgruppenhaltigen sulfonierten Polyethersulfon-Copolymers nach Anspruch 3, wobei die Umwandlung in Schritt iii) durch Lösen von Copolymer II in Dichlormethan bei 0 °C oder niedriger, allmähliches Zugeben einer überschüssigen Menge eines Dealkylierungsmittels unter Argonatmosphäre zur Durchführung einer Reaktion für 6 bis 8 Stunden und Rückgewinnen des abgeschiedenen Produkts durch einen Filter, gefolgt von Waschen mit Wasser und Vakuumtrocknen durchgeführt wird.

10. Verfahren zur Herstellung eines hydroxylgruppenhaltigen sulfonierten Polyethersulfon-Copolymers nach Anspruch 9, wobei das bei der Umwandlung in Schritt iii) verwendete Dealkylierungsmittel eine starke Lewis-Säure oder ein Halogenwasserstoff ist.

11. Verfahren zur Herstellung eines hydroxylgruppenhaltigen sulfonierten Polyethersulfon-Copolymers nach Anspruch 10, wobei die als Dealkylierungsmittel verwendete starke Lewis-Säure Bortribromid ist.

12. Verfahren zur Herstellung eines hydroxylgruppenhaltigen sulfonierten Polyethersulfon-Copolymers nach Anspruch 3, wobei die Umwandlung in Schritt iv) durch Eintauchen von Copolymer III in verdünnte Schwefelsäure oder Salzsäure für 3 bis 4 Stunden und anschließendes Behandeln mit kochendem Wasser für 12 bis 24 Stunden und Trocknen durchgeführt wird.

13. Verfahren zur Herstellung einer Polymerelektrolytmembran für Brennstoffzellen, wobei das Verfahren die folgenden Schritte umfasst:
i) Lösen des Copolymers III nach Anspruch 3 in Dimethylacetamid, Dimethylsulfoxid oder N-Methylpyrrolidon zur Gewinnung einer Polymerlösung von 2 bis 5 Gew.-%;
ii) Aufbringen der Polymerlösung auf eine Glasplatte und anschließendes Trocknen zur Ausbildung einer Membran; und
iii) Eintauchen der Membran in eine verdünnte Schwefelsäure- oder Salzsäurelösung für 3 bis 4 Stunden und anschließendes Waschen mit kochendem Wasser.

14. Membran-Elektroden-Einheit für Brennstoffzellen, wobei die Polymerelektrolytmembran für Brennstoffzellen nach Anspruch 1 zwischen einer Anode und einer Kathode angeordnet ist.

15. Brennstoffzelle, umfassend die Membran-Elektroden-Einheit nach Anspruch 14.

## Revendications

1. Membrane électrolyte polymère pour des piles à combustible comprenant le copolymère de polyéthersulfone sulfoné contenant des groupes hydroxyles et ayant les unités répétitives représentées par la Formule Chimique 1 suivante : 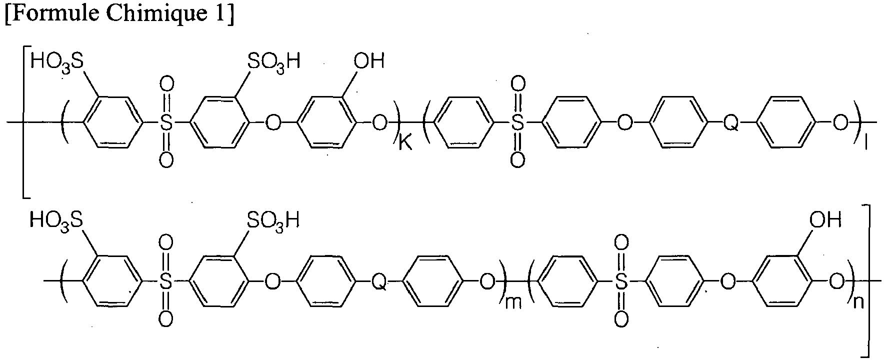 dans laquelle Q est O, S, C(=O), C(=O)NH, Si(CH₃)₂, (CH₂)ₚ (1 ≤ p ≤ 10), (CF₂)_{q} (1 ≤ q ≤ 10), C(CH₃)₂, C(CF₃)₂ ou C(CH₃)(CF₃) et chacun de k, 1, m et n correspond au rapport molaire de chaque monomère destiné à être utilisé dans la polycondensation.

2. Membrane électrolyte polymère selon la revendication 1, qui a un dégrée de sulfonation de 30 à 70 %.

3. Procédé de préparation d'un copolymère de polyéthersulfone sulfoné contenant des groupes hydroxyles, comprenant les étapes suivantes :
i) permettre à des réactifs comprenant le sel disodiqe ou le sel dipotassique de bis(4-fluoro-3-sulfophényl)sulfone, le bis(4-fluorophényl)sulfone, l'alkoxyhydroquinone, un composé à base de 4,4'-biphénol et le carbonate de potassium de réagir en présence d'un solvant de polymérisation afin d'obtenir le copolymère I de polyéthersulfone sulfoné contenant un groupe de sulfonate de sodium ou de potassium et un groupe alkoxy ;
ii) convertir le groupe de sulfonate de sodium ou de potassium du copolymère I en un groupe de chlorure de sulfonyle afin d'obtenir le copolymère II de polyéthersulfone sulfoné contenant un groupe de chlorure de sulfonyle et un groupe alkoxy ;
iii) convertir le groupe alkoxy du copolymère II en un groupe hydroxyle afin d'obtenir le copolymère III de polyéthersulfone sulfoné contenant un groupe de chlorure de sulfonyle et un groupe hydroxyle ; et
iv) convertir le groupe de chlorure de sulfonyle du copolymère III en un groupe d'acide sulfonique.

4. Procédé de préparation d'un copolymère de polyéthersulfone sulfoné contenant des groupes hydroxyles selon la revendication 3, dans lequel l'alkoxyhydroquinone est sélectionné dans le groupe contenant la méthoxyhydroquinone. l'éthoxyhydroquinone, la n-propoxyhydroquinone, l'isopropoxyhydroquinone, la n-butoxyhydroquinone, l'isobutoxyhydroquinone et la tert-butoxyhydroquinone.

5. Procédé de préparation d'un copolymère de polyéthersulfone sulfoné contenant des groupes hydroxyles selon la revendication 3, dans lequel le composé à base de 4,4'biphénol est représenté par la Formule Chimique I suivante : 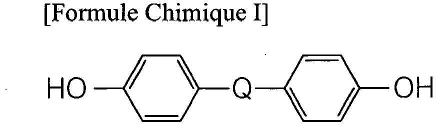 dans laquelle Q est O, S, C(=O), C(=O)NH, Si(CH₃)₂, (CH₂)ₚ (1 ≤ p ≤ 10), (CF₂)_{q} (1 ≤ q < 10), C(CH₃)₂, C(CF₃)₂ ou C(CH₃)(CF₃).

6. Procédé de préparation d'un copolymère de polyéthersulfone sulfoné contenant des groupes hydroxyles selon la revendication 3, dans lequel le copolymère I de l'étape (i) est obtenue en mélangeant les réactifs avec le solvant de polymérisation et par le reflux à 130 à 140 °C pour 3 à 4 heures afin d'effectuer la déshydratation, et puis en chauffant le mélange à 160 à 180 °C et effectuer une réaction pour 12 à 24 heures afin d'obtenir une solution de polymère, suivi par la précipitation dans l'alcool isopropylique, le lavage dans l'eau et la séchage sous vide.

7. Procédé de préparation d'un copolymère de polyéthersulfone sulfoné contenant des groupes hydroxyles selon la revendication 6, dans lequel le solvant de polymérisation est un mélange de diméthylacétamide (DMAc) ou diméthylsulfoxyde (DMSO) avec du toluène dans un rapport de volume de 2 : 1.

8. Procédé de préparation d'un copolymère de polyéthersulfone sulfoné contenant des groupes hydroxyles selon la revendication 3, dans lequel la conversion dans l'étape ii) est effectuée en dissolvant le copolymère I dans le diméthylformamide, effectuant la réaction avec du chlorure de thionyle à 50 à 60 °C pour 3 à 4 heures, produisant une solution de polymère dans laquelle le chlorure de thionyle excédentaire est éliminé par distillation et précipitant la solution de polymère dans l'alcool isopropylique, suivi par le lavage avec de l'eau et le séchage sous vide.

9. Procédé de préparation d'un copolymère de polyéthersulfone sulfoné contenant des groupes hydroxyles selon la revendication 3, dans lequel la conversion dans l'étape iii) est effectuée en dissolvant le copolymère II dans le dichlorométhane à une température inférieure ou égale à 0 °C, ajoutant graduellement une quantité excessive d'un agent désalkylant sous l'atmosphère d'argon afin d'effectuer une réaction de 6 à 8 heures et récupérant le produit précipité par un filtre, suivi par le lavage avec de l'eau et la séchage sous vide.

10. Procédé de préparation d'un copolymère de polyéthersulfone sulfoné contenant des groupes hydroxyles selon la revendication 9, dans lequel l'agent désalkylant utilisé dans la conversion de l'étape iii) est un acide de Lewis fort ou un halogénure d'hydrogène.

11. Procédé de préparation d'un copolymère de polyéthersulfone sulfoné contenant des groupes hydroxyles selon la revendication 10, dans lequel l'acide de Lewis fort utilisé comme agent désalkylant est le tribromure de bore.

12. Procédé de préparation d'un copolymère de polyéthersulfone sulfoné contenant des groupes hydroxyles selon la revendication 3, dans lequel la conversion dans l'étape iv) est effectuée en immergeant le copolymère III dans l'acide sulfurique ou l'acide hydrochlorique dilué pour 3 à 4 heures, suivi par un traitement avec de l'eau bouillante pour 12 à 24 heures et la séchage.

13. Procédé de production d'une membrane électrolyte polymère pour des piles à combustible, comprenant les étapes suivantes :
i) dissoudre le copolymère III selon la revendication 3 dans le diméthylacétamide, le diméthylsulfoxyde ou la N-méthylpyrrolidone afin d'obtenir une solution polymère de 2 à 5 % en poids ;
ii) appliquer la solution polymère sur une plaque de verre, suivi par le séchage, afin de former une membrane ; et
iii) immerger la membrane dans une solution d'acide sulfurique ou d'acide hydrochlorique diluée pour 3 à 4 heures, suivi par le levage avec de l'eau bouillante.

14. Assemblage membrane-électrode pour des piles à combustible, dans lequel la membrane électrolyte polymère pour des piles à combustible selon la revendication 1 est disposée entre une anode et une cathode.

15. Pile à combustible comprenant l'assemblage membrane-électrode selon la revendication 14.
